# EUROPÄISCHE PATENTSCHRIFT

(11) **EP 4 148 399 B1**
(45) Veröffentlichungstag und Bekanntmachung des Hinweises auf die Patenterteilung: **28.05.2025**
(21) Anmeldenummer: 22193381.5
(22) Anmeldetag: 01.09.2022
(51) Int. Cl.: G01F 23/284, G01S 13/88, H01Q 1/22, H01Q 19/06

(54) **AUFSATZ ZUR ANBINDUNG AN EIN FÜLLSTANDMESSGERÄT ZUR MESSUNG DES FÜLLSTANDES EINES MEDIUMS IN EINEM BEHÄLTER**
ATTACHMENT FOR CONNECTION TO A LEVEL MEASURING DEVICE FOR MEASURING THE LEVEL OF A MEDIUM IN A CONTAINER
PIÈCE RAPPORTÉE À CONNECTER À UN APPAREIL DE MESURE DE NIVEAU POUR MESURER LE NIVEAU D'UN FLUIDE DANS UN RÉSERVOIR

(30) Priorität: 10.09.2021 DE 102021123532
(43) Veröffentlichungstag der Anmeldung: 15.03.2023
(73) Patentinhaber: Krohne Messtechnik GmbH, 47058 Duisburg (DE)
(72) Erfinder: Schmits, Christoph, Dortmund (DE); Schulz, Christian, Bochum (DE)
(74) Vertreter: Gesthuysen Patentanwälte

(56) Entgegenhaltungen:
- CN-A- 109 713 452
- DE-A1- 102017 124 996
- US-A1- 2015 241 261
- US-A1- 2016 320 225
- US-A1- 2019 353 514

## Beschreibung

Die Erfindung geht aus von einem Aufsatz zur Anbindung an ein Füllstandmessgerät zur Messung des Füllstandes eines Mediums in einem Behälter, und von einem System aus einem Füllstandmessgerät zur Messung des Füllstandes eines Mediums in einem Behälter und wenigstens einem Aufsatz, wobei das Füllstandmessgerät eine Steuer- und Auswerteeinheit zur Erzeugung eines Messsignals und ein Prozessanschlusselement aufweist, wobei das Prozessanschlusselement mediumseitig ein Transmissionselement aufweist, wobei das Transmissionselement zumindest teilweise durchlässig für das Messsignal ist.

Wenn es heißt, dass das Prozessanschlusselement mediumseitig ein Transmissionselement aufweist, so ist damit gemeint, dass das Transmissionselement im Betrieb bzw. im montierten Zustand mediumseitig angeordnet ist. Gemäß einer Ausgestaltung ist das Messsignal ein Radarsignal und das Füllstandmessgerät ist ein freistrahlendes Radar-Füllstandmessgerät. Das Messsignal kann im Betrieb kontinuierlich oder auch gepulst abgestrahlt werden. Freistrahlende Füllstandmessgeräte können in der Praxis in unterschiedlichen Situationen eingesetzt werden.

Je nach Messsituation sind verschiedene Eigenschaften der von den Füllstandmessgeräten ausgesendeten Messsignale von Vorteil. Relevant ist insbesondere der Öffnungswinkel des ausgesendeten Signals, der den Bereich des Mediums definiert, der zur Bestimmung des Füllstandes berücksichtigt wird. Breite Messsignale mit großen Öffnungswinkeln weisen den Vorteil auf, dass eine große Fläche des Mediums zur Bestimmung des Füllstandes erfasst wird. Andererseits können im Betrieb störende Einbauten im Behälter auch leicht das Messsignal stören.

Daher ist es situationsbedingt ebenfalls vorteilhaft, wenn das Messsignal einen möglichst kleinen Öffnungswinkel aufweist. Eine solche Ausbildung des Messsignals kommt in der Praxis beispielsweise in schmalen, hohen Behältern zur Anwendung. Insbesondere Linsenantennen, die ein Messsignal im Bereich von 80 GHz aussenden, können ein Messsignal mit einem Öffnungswinkel von wenigen Grad realisieren.

Füllstandmessgeräte sind beispielsweise aus den Dokumenten US 2015/241261 A1, DE 10 2017 124996 A1, US 2019/353514 A1, US 2016/320225 A1 und CN 109 713 452 A bekannt.

Der Erfindung liegt die Aufgabe zugrunde, ein System aus einem Füllstandmessgerät und einem Aufsatz anzugeben, sodass das Füllstandmessgerät besonders flexibel eingesetzt werden kann. Darüber hinaus ist es Aufgabe der Erfindung, einen Aufsatz zur Herstellung eines erfindungsgemäßen Systems anzugeben.

Gemäß einer ersten Lehre wird die zuvor genannte Aufgabe durch ein eingangs genanntes System aus einem Füllstandmessgerät und wenigstens einem Aufsatz dadurch gelöst, dass der wenigstens eine Aufsatz mit dem Prozessanschlusselement verbunden ist, wobei der wenigstens eine Aufsatz mediumseitig eine Aufsatzlinse zur Einkopplung des Messsignals in den Behälter aufweist,
wobei die Aufsatzlinse derart ausgebildet und im Betrieb in Ausbreitungsrichtung des Messsignals hinter dem Transmissionselement derart angeordnet ist, dass sie den Öffnungswinkel des Messsignals ändert.

Beispielsweise kann die Aufsatzlinse das Messsignal aufweiten, also den Öffnungswinkel vergrößern oder das Messsignal fokussieren, also den Öffnungswinkel verkleinern.

Erfindungsgemäß wurde erkannt, dass durch einen Aufsatz vor dem Transmissionselement Einfluss auf die Richtcharakteristik bzw. den Öffnungswinkel des Messsignals genommen werden kann, wobei die durch das Füllstandmessgerät realisierte Richtcharakteristik durch Anwendung des Aufsatzes an eine individuelle Messsituation angepasst werden kann. Dadurch kann ein Messgerät bzw. eine Mehrzahl von Füllstandmessgeräten mit gleichem Aufbau für unterschiedliche Messsituationen optimiert werden.

Ist der Aufsatz austauschbar also lösbar mit dem Füllstandmessgerät verbunden, kann auch ein einziges Füllstandmessgerät mit unterschiedlichen Aufsätzen kombiniert und damit beispielsweise auch nach dem Einbau in einen Behälter für unterschiedliche Messsituationen optimiert werden.

Das erfindungsgemäße System kann damit insgesamt besonders flexibel eingesetzt werden, da das Messgerät für unterschiedliche Anwendungen optimiert werden kann ohne dass bauliche Veränderungen an dem Messgerät vorgenommen werden müssen.

Grundsätzlich sind das Transmissionselement und die Aufsatzlinse zur Formung des Messsignals aufeinander abgestimmt. Im Detail soll auch durch die Kombination dieser Elemente kein Fokuspunkt im Behälter erzeugt werden, damit der gewünschte Messbereich vollständig ausgeleuchtet wird.

Gemäß einer ersten Ausgestaltung ist das Transmissionselement als Linse oder als Fenster ausgebildet. Ist das Transmissionselement als Linse ausgebildet, so ist gemäß einer Ausgestaltung das durch die Linse geformte Messsignal insbesondere im Hinblick auf den Öffnungswinkel des Messsignals auf eine Messsituation optimiert. Beispielsweise kann ein Messsignal mit einer Frequenz von ca. 80 GHz bei einem Linsendurchmesser von ca. 70 mm einen besonders kleinen Öffnungswinkel von ca. 4° aufweisen. Alternativ kann ein Messsignal mit einer Frequenz von ca. 80 GHz bei einem Linsendurchmesser von ca. 40 mm einen Öffnungswinkel von ca. 8° aufweisen, womit ein größerer Messbereich erfasst werden kann. Denkbar ist ebenso, dass die Linse das Messsignal derart formt, dass der Öffnungswinkel einen mittleren Wert aufweist.

Der Einsatz eines für das Messsignal durchlässigen Fensters ist hier ebenso denkbar.

Gemäß einer weiteren besonders bevorzugten Ausgestaltung ist die Verbindung zwischen dem Prozessanschlusselement und dem Aufsatz als lösbare Verbindung ausgebildet, wobei die Verbindung als kraftschlüssige und/oder formschlüssige Verbindung ausgebildet ist, wobei die Verbindung vorzugsweise über ein Gewinde oder über eine Rastverbindung oder über eine Flanschverbindung realisiert wird. Diese Ausgestaltung weist den Vorteil auf, dass der wenigstens eine Aufsatz mechanisch fest und auch druckfest mit dem Prozessanschlusselement verbunden werden kann und darüber hinaus ebenfalls ausgetauscht werden kann.

Beispielsweise weist das Prozessanschlusselement ein Außengewinde auf und der Aufsatz weist ein passendes Innengewinde auf, über das der Aufsatz an dem Prozessanschlusselement angeordnet ist. Gemäß einer alternativen Ausbildung weist das Prozessanschlusselement ein Innengewinde aus und der Aufsatz weist ein passendes Außengewinde auf, über das der Aufsatz an dem Prozessanschlusselement angeordnet ist.

Alternativ ist die Verbindung zwischen dem Prozessanschlusselement und dem Aufsatz als unlösbare Verbindung ausgebildet, wobei die unlösbare Verbindung vorzugsweise als stoffschlüssige Verbindung ausgebildet ist.

Gemäß einer weiteren Ausgestaltung ist eine Halterung vorhanden, wobei der Aufsatz über die Halterung mit dem Behälter verbunden werden kann. Neben der Anbindung an das Prozessanschlusselement kann der Aufsatz ebenso im Behälter durch eine entsprechende Halterung positioniert werden.

Gemäß einer weiteren bevorzugten Ausgestaltung ist der Aufsatz als Adapter ausgebildet. Besonders bevorzugt ist der Adapter sowohl mit dem Prozessanschlusselement des Füllstandmessgeräts als auch mit einem Prozessanschluss, insbesondere einem Behälteranschluss, verbindbar.

Dabei ist der Adapter insbesondere derart ausgebildet, dass er sowohl mit dem Prozessanschlusselement als auch mit einem Behälteranschluss über jeweils einen Gewindeanschluss verbunden werden kann. Hierzu weist der Adapter zwei Gewinde, besonders bevorzugt zwei unterschiedliche Gewinde auf.

Beispielsweise adaptiert der Adapter von einem GAS Gewinde auf ein NPT Gewinde. Alternativ adaptiert der Adapter von einem NPT Gewinde auf ein GAS Gewinde.

Zudem kann der Adapter auch derart ausgebildet sein, dass er mit dem Behälteranschluss über einen Bajonettanschluss verbunden werden kann.

Die Ausgestaltung als Adapter weist damit den Vorteil auf, dass ein Füllstandmessgerät über einen solchen Adapter an verschiedene Behälter mit unterschiedlichen Behälteranschlüssen angeordnet werden kann. Insgesamt wird die flexible Anordnung des Füllstandmessgeräts durch diese Ausgestaltung weiter verbessert.

Gemäß einer nächsten bevorzugten Ausgestaltung weist der wenigstens eine Aufsatz einen Innenraum auf, wobei der Innenraum zumindest teilweise hohl ausgebildet ist. Dabei ist insbesondere der Bereich zwischen dem Transmissionselement und der Aufsatzlinse als Hohlraum ausgebildet. Über diesen Hohlraum wird im Betrieb das Messsignal von dem Transmissionselement zu der Aufsatzlinse übertragen.

Gemäß einer nächsten Ausgestaltung ist im Innenraum des wenigstens einen Aufsatzes mindestens ein dielektrisches Material zur Führung und/oder zur Anpassung des Messsignals vorhanden.

Zudem kann gemäß einer weiteren Ausgestaltung im Innenraum des Aufsatzes eine Hornstruktur zur Führung des Messsignals vorhanden sein.

Eine weitere vorteilhafte Ausgestaltung des Systems zeichnet sich dadurch aus, dass das Transmissionselement als Linse ausgebildet ist, wobei der Durchmesser dieser Linse kleiner ist als der Durchmesser der Aufsatzlinse.

Gemäß dieser Ausgestaltung kann der Öffnungswinkel des Messsignals besonders vorteilhaft fokussiert werden, da bekanntlich eine große Aperturfläche notwendig ist, um einen besonders kleinen Öffnungswinkel des Messsignals zu realisieren. Diese Ausgestaltung ist damit insbesondere vorteilhaft, wenn störende Einbauten in den Behälter hineinragen. So kann gewährleistet werden, dass das Messsignal nicht durch entsprechende Einbauten gestört wird. Diese Ausgestaltung ist ebenfalls vorteilhaft, wenn ein Prozessmedium in einem langen schmalen Behälter überwacht werden soll.

Eine weitere Ausgestaltung zeichnet sich dadurch aus, dass das Transmissionselement als Linse ausgebildet ist, wobei der Durchmesser dieser Linse größer als der Durchmesser der Aufsatzlinse ist.

Mit dieser Ausgestaltung kann beispielsweise der Öffnungswinkel des durch das Transmissionselement hindurchtretenden Messsignals vergrößert werden, womit auch ein größerer Bereich des Mediums erfasst wird. Diese Ausgestaltung ist vorteilhaft, wenn ein möglichst großer Messbereich des Mediums ausgeleuchtet werden soll.

Eine weitere Ausgestaltung zeichnet sich dadurch aus, dass das Transmissionselement als Linse ausgebildet ist, wobei der Durchmesser dieser Linse im Wesentlichen identisch zu dem Durchmesser der Aufsatzlinse ist.

Alternativ oder zusätzlich kann die Aufsatzlinse sich auch in der Form, insbesondere im Krümmungsradius und/oder im Material von dem Transmissionselement unterscheiden.

Ist im Innenraum des wenigstens einen Aufsatzes zumindest bereichsweise ein Hohlraum vorhanden, so ist es vorteilhaft, wenn im Bereich des Hohlraums eine Überdrucksicherung zur Begrenzung des Überdrucks im Aufsatz vorhanden ist. Diese Ausgestaltung eignet sich insbesondere für Messungen unter hohen Prozessdrücken.

Besonders bevorzugt ist die Überdrucksicherung derart ausgebildet, dass sie bei Überschreiten eines Grenzwertes für den Druck im Aufsatz auslöst, wobei der Grenzwert kleiner als der maximal erlaubte Prozessdruck ist.

Gemäß einer Ausgestaltung beträgt der Grenzwert ungefähr ein Drittel des Prozessdrucks.

Gemäß einer weiteren Ausgestaltung ist die Überdrucksicherung als Sollbruchstelle des Aufsatzgehäuses ausgebildet. Alternativ kann die Überdrucksicherung auch durch jede weitere bekannte und geeignete Überdrucksicherung realisiert sein.

Das Vorhandensein einer Überdrucksicherung gewährleistet einen besseren Schutz insbesondere für die Elektronik und die Verkabelung des Messgeräts.

Besonders bevorzugt ist die Überdrucksicherung derart an dem Aufsatz angeordnet, dass sie im Betrieb, also im montierten Zustand nicht innerhalb des Behälters angeordnet ist.

Gemäß einer weiteren Ausgestaltung sind das Transmissionselement und/oder die Aufsatzlinse als Dichtung ausgebildet. Sind das Transmissionselement und die Aufsatzlinse als Dichtung ausgebildet, so gewährleistet diese Ausgestaltung die Anforderungen im Hinblick auf eine doppelte Dichtung für den Einsatz in explosionsgefährdeten Anwendungen. Die Kombination einer doppelten Dichtung mit einer Überdrucksicherung gewährleistet insgesamt einen besonders hohen Schutz für die Elektronik und die Verkabelung der Steuer- und Auswerteeinheit.

Gemäß einer weiteren Ausgestaltung ist die Aufsatzlinse derart ausgebildet und auf das Transmissionselement abgestimmt, dass die Aufsatzlinse zusätzlich die Ausbreitungsrichtung des Messsignals ändert. Besonders bevorzugt ist das Transmissionselement gemäß dieser Ausgestaltung ebenfalls als Linse ausgebildet. Beispielsweise ist die Aufsatzlinse derart ausgebildet und auf das Transmissionselement angepasst, dass die Aufsatzlinse den Öffnungswinkel des Messsignals, beispielsweise auf ca. 9°, verkleinert und die Ausbreitungsrichtung um wenige Grad, beispielsweise um ca. 6°, verschwenkt. Die Beschreibung und/oder die Bestimmung der geometrischen Ausgestaltung der einzelnen Antennenelemente, wie beispielsweise des als Linse ausgebildeten Transmissionselementes und/oder der Aufsatzlinse, wird besonders bevorzugt vereinfacht durch die Annahme, dass die Ausbreitung der elektromagnetischen Wellen beugungsfrei verläuft, sodass statt der Phasenfronten der Strahlengang betrachtet werden kann. Folglich kann eine sich ausbreitende Welle durch Strahlen in Ausbreitungsrichtung besonders einfach beschrieben werden.

Diese Ausgestaltung hat den Vorteil, dass eine schiefe Einbauposition der Antenne zur Erzeugung und Abstrahlung des Messsignals ausgeglichen werden kann oder auch, dass der auszuleuchtende Bereich im Behälter eines Messsgeräts besonders flexibel eingestellt und/oder beispielsweise durch verschiedene Aufsätze verändert werden kann.

Gemäß einer weiteren besonders bevorzugten Ausgestaltung ist dem Füllstandmessgerät eine Mehrzahl an Aufsätzen zugeordnet, mit denen unterschiedliche Öffnungswinkel des Messsignals und/oder unterschiedliche Richtungsänderungen in Ausbreitungsrichtung des Messsignals realisiert werden, insbesondere wobei sich die einzelnen Aufsätze in der Form der Aufsatzlinse und/oder in der Größe der Aufsatzlinse und/oder in dem Material der Aufsatzlinse und/oder im Abstand der Aufsatzlinse zum Transmissionselement im verbundenen Zustand unterscheiden.

Wenn es heißt, dass einem Füllstandmessgerät eine Mehrzahl an Aufsätzen zugeordnet ist, so ist damit gemeint, dass eine Mehrzahl an sich unterscheidenden Aufsätzen derart ausgebildet sind, dass sie mit dem Prozessanschlusselement des Füllstandmessgeräts verbunden werden können. Eine solche Verbindung erfolgt nicht gleichzeitig, vielmehr können die einzelnen Aufsätze in unterschiedlichen Messsituationen mit dem Prozessanschluss verbunden werden.

Dieses System aus einem Füllstandmessgerät und einer Mehrzahl von Aufsätzen, die jeweils das Messgerät für unterschiedliche Messsituationen optimieren, weist den Vorteil auf, dass das Füllstandmessgerät besonders flexibel für verschiedene Anwendungsfälle eingesetzt werden kann.

Gemäß einer zweiten Lehre betrifft die vorliegende Erfindung einen Aufsatz zur Anbindung an ein Füllstandmessgerät zur Herstellung eines der zuvor beschriebenen Systeme. Dazu ist der Aufsatz gemäß einer der zuvor beschriebenen Ausgestaltungen ausgebildet.

Es gibt nun eine Vielzahl von Möglichkeiten das erfindungsgemäße System sowie den erfindungsgemäßen Aufsatz auszugestalten und weiterzubilden. Hierzu wird verwiesen auf die den unabhängigen Patentansprüchen nachgeordneten Patentansprüche sowie auf die Beschreibung der nachfolgenden Ausführungsbeispiele zusammen mit der Zeichnung. In der Zeichnung zeigen
- Fig. 1: ein erstes Ausführungsbeispiel eines erfindungsgemäßen Systems,
- Fig. 2: ein weiteres Ausführungsbeispiel eines erfindungsgemäßen Systems,
- Fig. 3: ein weiteres Ausführungsbeispiel eines erfindungsgemäßen Systems,
- Fig. 4: ein weiteres Ausführungsbeispiel eines erfindungsgemäßen Systems,
- Fig. 5: ein weiteres Ausführungsbeispiel eines erfindungsgemäßen Systems,
- Fig. 6: ein weiteres Ausführungsbeispiel eines erfindungsgemäßen Systems,
- Fig. 7: ein weiteres Ausführungsbeispiel eines erfindungsgemäßen Systems und
- Fig. 8: ein weiteres Ausführungsbeispiel eines erfindungsgemäßen Systems, das an einem Behälter angeordnet ist.

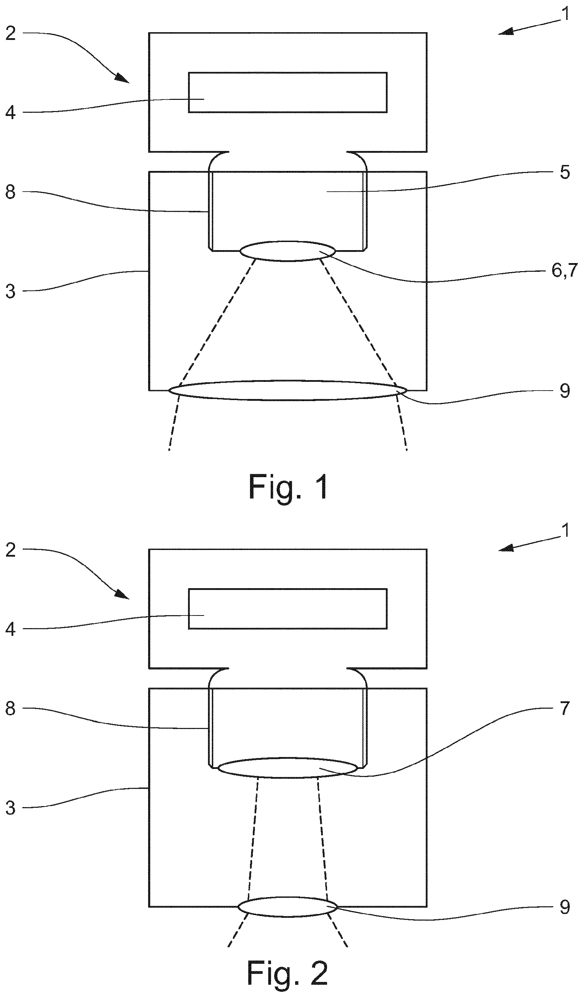

Fig. 1 zeigt ein erstes Ausführungsbeispiel eines Systems 1 aus einem Füllstandmessgerät 2 zur Messung des Füllstandes eines Mediums in einem Behälter und einem Aufsatz 3, wobei das Füllstandmessgerät 2 eine Steuer- und Auswerteeinheit 4 und ein Prozessanschlusselement 5 aufweist, wobei das Prozessanschlusselement 5 mediumseitig ein Transmissionselement 6 in Form einer Linse 7 aufweist, wobei die Linse 7 zumindest teilweise durchlässig für das von der Steuer- und Auswerteeinheit 4 erzeugte Messsignal ist.

Mit dem Prozessanschlusselement 5 ist über eine Gewindeverbindung 8 ein Aufsatz 3 verbunden, wobei der Aufsatz 3 mediumseitig eine Aufsatzlinse 9 zur Einkopplung des Messsignals in einen Behälter 10 aufweist. Die Aufsatzlinse 9 ist im dargestellten verbundenen Zustand derart ausgebildet und angeordnet, dass sie die Richtcharakteristik des Messsignals in Ausbreitungsrichtung des Messsignals hinter dem Transmissionselement 6 zur Anpassung an die Prozesssituation formt, d. h. fokussiert oder aufweitet.

In dem dargestellten Ausführungsbeispiel sind die Aufsatzlinse 9 und die Linse 7 derart aufeinander abgestimmt, dass der Öffnungswinkel des Messsignals durch die Aufsatzlinse verringert wird. Hierzu ist die Apertur der Aufsatzlinse 9 besonders groß ausgebildet. Dieses Ausführungsbeispiel ist damit insbesondere vorteilhaft in Messsituationen, in denen der Behälter 10 lang und schmal ist, oder in denen störende Einbauten in den Behälter 10 ragen.

Fig. 2 zeigt ein weiteres Ausführungsbeispiel eines erfindungsgemäßen Systems 1, wobei im Unterschied zum ersten Ausführungsbeispiel die als Transmissionselement 6 ausgebildete Linse 7 einen größeren Durchmesser aufweist als die Aufsatzlinse 9. Gemäß dieser Ausgestaltung sind die Linse 7 und die Aufsatzlinse 9 derart aufeinander angepasst, dass der Öffnungswinkel des Messsignals durch die Aufsatzlinse 9 vergrößert wird. Hierzu ist der Durchmesser der Aufsatzlinse 9 kleiner ausgebildet als der Durchmesser der Linse 7.

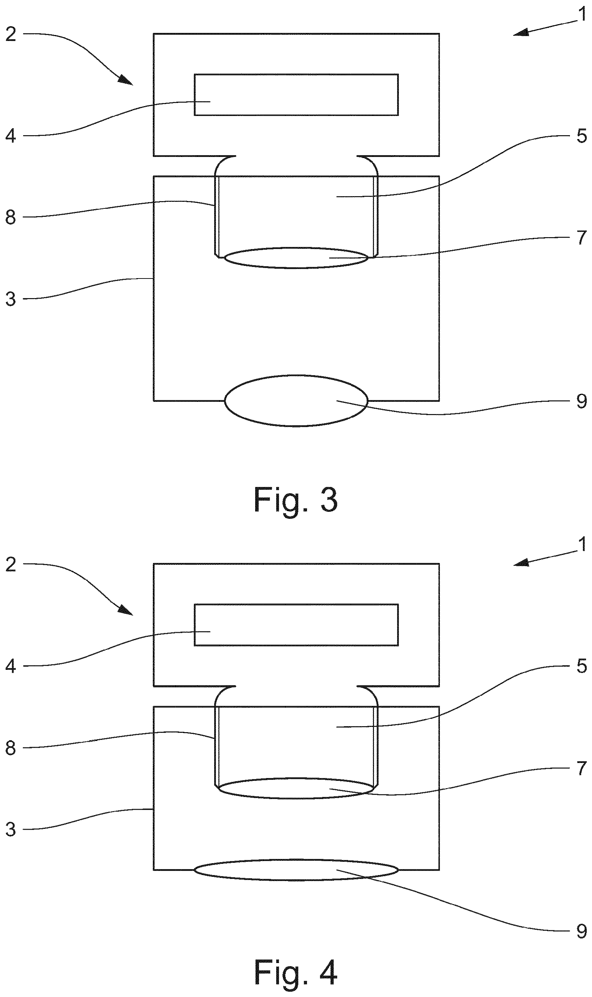

Neben der Abweichung im Durchmesser kann die Aufsatzlinse 9 ebenfalls in der Form, insbesondere im Krümmungsradius und/oder im Material von der Linse 7 abweichen. Dies ist in Fig. 3 dargestellt.

Fig. 4 zeigt ein weiteres Ausführungsbeispiel, wobei der Abstand zwischen der Aufsatzlinse 9 und der als Transmissionselement 6 ausgebildeten Linse 7 verkürzt ist.

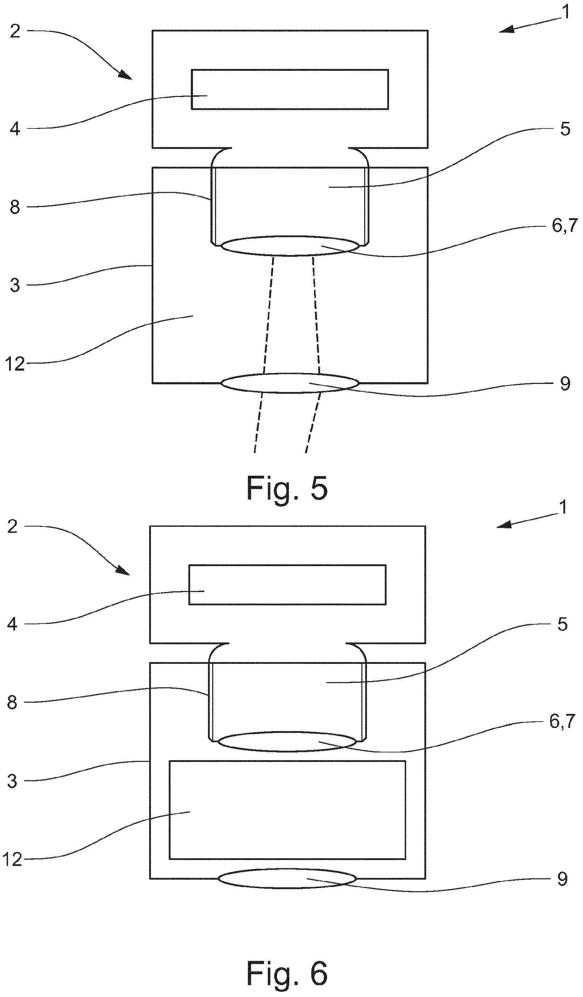

Fig. 5 zeigt ein weiteres Ausführungsbeispiel eines Systems 1 aus einem Füllstandmessgerät 2 und einem Aufsatz 3, wobei das Transmissionselement 6 als Linse 7 ausgebildet und wobei die Aufsatzlinse 9 derart auf die Linse 7 abgestimmt ist, dass sie den Öffnungswinkel des Messsignals sowohl verkleinert als auch um wenige Grad verschwenkt.

In dem in Fig. 6 dargestellten Ausführungsbeispiel entspricht der Durchmesser der als Transmissionselement 6 ausgebildeten ersten Linse 7 dem Durchmesser der Aufsatzlinse 9. Zwischen den Linsen 7 und 9 ist ein dielektrisches Material 12 zur Führung des Messsignals angeordnet. In diesem Ausführungsbeispiel sind sowohl die erste als Transmissionselement 6 ausgebildete Linse 7 als auch die Aufsatzlinse 9 als Dichtung ausgebildet, sodass hier die Elektronik der Steuer- und Auswerteeinheit 4 sowie die zugehörige, hier nicht dargestellte Verkabelung durch eine doppelte Dichtung geschützt sind.

Insbesondere in explosionsgefährdeten Anwendungen ist dieses Ausführungsbeispiel vorteilhaft.

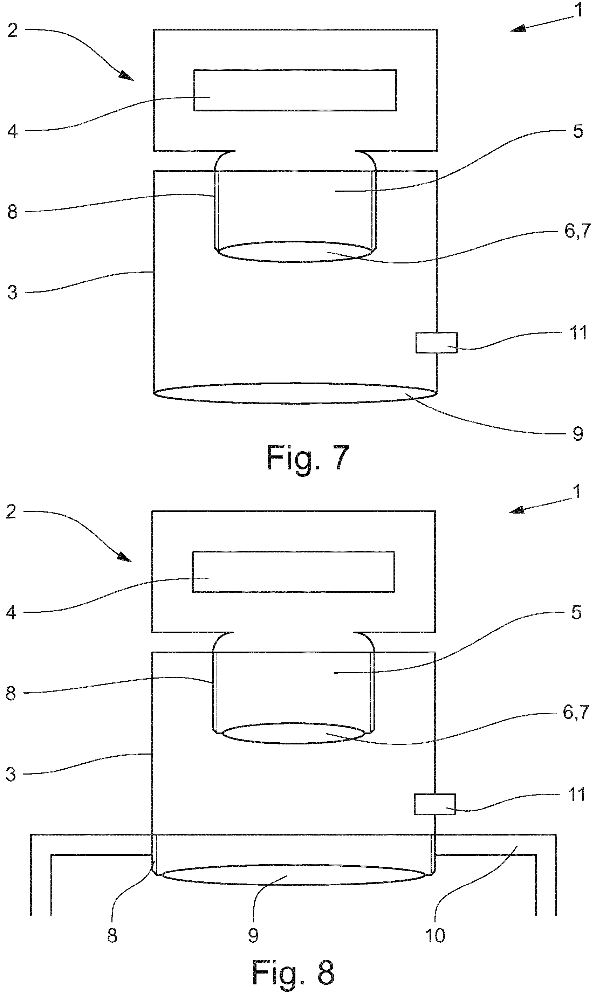

Der Aufsatz 3 des in Fig. 7 gezeigten Ausführungsbeispiel weist zusätzlich eine Überdrucksicherung 11 auf, die im Fall eines unerwünschten Überdrucks im Aufsatz 3, beispielsweise wenn die prozessseitig angeordnete Dichtung defekt ist, Druck aus dem Aufsatz 3 ablässt. Insbesondere in Kombination mit einer doppelten Dichtung ist dieses Ausführungsbeispiel vorteilhaft im Hinblick auf die Anwendung in explosionsgefährdeten Messsituationen.

Fig. 8 zeigt ein weiteres Ausführungsbeispiel des erfindungsgemäßen Systems 1, das an einem Behälter 10 angeordnet ist. Im dargestellten Ausführungsbeispiel ist der Aufsatz 3 als Adapter ausgebildet. Der Adapter ist sowohl mit dem Prozessanschlusselement 5 als auch mit dem Behälteranschluss verschraubt. Dargestellt ist ebenfalls eine Überdrucksicherung 11, die an dem Gehäuse des Aufsatzes 3 außerhalb des Behälters 10 angeordnet ist. Im Ergebnis eignet sich auch dieses Ausführungsbeispiel besonders für den Einsatz in explosionsgefährdeten Bereichen.

### Bezugszeichen

- 1: System aus Füllstandmessgerät und Aufsatz
- 2: Füllstandmessgerät
- 3: Aufsatz
- 4: Steuer- und Auswerteeinheit
- 5: Prozessanschlusselement
- 6: Transmissionselement
- 7: Linse
- 8: Gewindeverbindung
- 9: Aufsatzlinse
- 10: Behälter
- 11: Überdrucksicherung
- 12: dielektrisches Material

## Patentansprüche

1. Aufsatz (3) zur Anbindung an ein Füllstandmessgerät (2) zur Messung des Füllstandes eines Mediums in einem Behälter (10), wobei der Aufsatz (3) eine Aufsatzlinse (9) aufweist, die im montierten Zustand mediumseitig angeordnet ist und zur Einkopplung des Messsignals in den Behälter (10) geeignet ist, **dadurch gekennzeichnet, dass** die Aufsatzlinse (9) derart ausgebildet und im Betrieb in Ausbreitungsrichtung des Messsignals hinter einem Transmissionselement (6) des Füllstandmessgeräts derart anordenbar ist, dass sie den Öffnungswinkel des Messsignals ändert.

2. System (1) aus einem Füllstandmessgerät (2) zur Messung des Füllstandes eines Mediums in einem Behälter (10) und wenigstens einem Aufsatz (3) nach Anspruch 1, wobei das Füllstandmessgerät (2) eine Steuer- und Auswerteeinheit (4) zur Erzeugung eines Messsignals und ein Prozessanschlusselement (5) aufweist, wobei das Prozessanschlusselement (5) mediumseitig das Transmissionselement (6) aufweist, wobei das Transmissionselement (6) zumindest teilweise durchlässig für das Messsignal ist,
**dadurch gekennzeichnet,**
**dass** der wenigstens eine Aufsatz (3) mit dem Prozessanschlusselement (5) verbunden ist, sodass die Aufsatzlinse (9) in Ausbreitungsrichtung des Messsignals hinter dem Transmissionselement (6) derart angeordnet ist, dass sie den Öffnungswinkel des Messsignals ändert.

3. System (1) nach Anspruch 2, **dadurch gekennzeichnet, dass** das Transmissionselement (6) als Linse (7) oder als Fenster ausgebildet ist.

4. System (1) nach einem der Ansprüche 2 oder 3, **dadurch gekennzeichnet, dass** die Verbindung zwischen dem Prozessanschlusselement (5) und dem Aufsatz (3) als lösbare Verbindung ausgebildet ist, wobei die Verbindung als kraftschlüssige und/oder formschlüssige Verbindung ausgebildet ist, wobei die Verbindung vorzugsweise über ein Gewinde oder über eine Rastverbindung oder über eine Flanschverbindung realisiert wird.

5. System (1) nach einem der Ansprüche 2 oder 3, **dadurch gekennzeichnet, dass** die Verbindung zwischen dem Prozessanschlusselement (5) und dem Aufsatz (3) als unlösbare Verbindung ausgebildet ist, wobei die unlösbare Verbindung vorzugsweise als stoffschlüssige Verbindung ausgebildet ist.

6. System (1) nach einem der Ansprüche 2 bis 5, **dadurch gekennzeichnet, dass** eine Halterung vorhanden ist, wobei der Aufsatz über die Halterung mit dem Behälter (10) verbunden werden kann.

7. System nach einem der Ansprüche 2 bis 6, **dadurch gekennzeichnet, dass** der Aufsatz (3) als Adapter ausgebildet ist, wobei der Adapter insbesondere derart ausgebildet ist, dass er sowohl mit dem Prozessanschlusselement als auch mit einem Behälteranschluss über ein Gewinde verbunden werden kann.

8. System (1) nach einem der Ansprüche 2 bis 7, **dadurch gekennzeichnet, dass** der wenigstens eine Aufsatz (3) einen Innenraum aufweist und dass der Innenraum zumindest teilweise hohl ausgebildet ist, wobei insbesondere der Bereich zwischen dem Transmissionselement (6) und der Aufsatzlinse (9) als Hohlraum ausgebildet ist.

9. System (1) nach einem der Ansprüche 2 bis 8, **dadurch gekennzeichnet, dass** der wenigstens eine Aufsatz (3) einen Innenraum aufweist und dass im Innenraum des wenigstens einen Aufsatzes (3) wenigstens ein dielektrisches Material (12) zur Führung und/oder zur Anpassung des Messsignals vorhanden ist.

10. System (1) nach einem der Ansprüche 2 bis 9, **dadurch gekennzeichnet, dass** der wenigstens eine Aufsatz (3) einen Innenraum aufweist und dass im Innenraum des wenigstens einen Aufsatzes (3) eine Hornstruktur zur Führung des Messsignals vorhanden ist.

11. System (1) nach einem der Ansprüche 2 bis 10, **dadurch gekennzeichnet, dass** das Transmissionselement (6) als Linse (7) ausgebildet ist, wobei der Durchmesser dieser Linse (7) kleiner ist als der Durchmesser der Aufsatzlinse (9).

12. System (1) nach einem der Ansprüche 2 bis 10, **dadurch gekennzeichnet, dass** das Transmissionselement (6) als Linse (7) ausgebildet ist, wobei der Durchmesser dieser Linse (7) größer ist als der Durchmesser der Aufsatzlinse (9).

13. System (1) nach einem der Ansprüche 2 bis 10, **dadurch gekennzeichnet, dass** das Transmissionselement (6) als Linse (7) ausgebildet ist, wobei der Durchmesser dieser Linse (7) im Wesentlichen identisch ist zu dem Durchmesser der Aufsatzlinse (9).

14. System (1) nach Anspruch 8, **dadurch gekennzeichnet, dass** im Bereich des Hohlraums eine Überdrucksicherung (1) zur Begrenzung des Überdrucks im Hohlraum vorhanden ist.

15. System (1) nach Anspruch 14, **dadurch gekennzeichnet, dass** die Überdrucksicherung (11) derart ausgebildet ist, dass sie bei Überschreiten eines Grenzwertes für den Druck im Aufsatz auslöst, wobei der Grenzwert kleiner als der maximal erlaubte Prozessdruck ist, insbesondere wobei der Grenzwert ungefähr ein Drittel des Prozessdrucks beträgt.

16. System (1) nach einem der Ansprüche 2 bis 15, **dadurch gekennzeichnet, dass** das Transmissionselement (6) und/oder die Aufsatzlinse (9) als Dichtung ausgebildet sind.

17. System nach einem der Ansprüche 2 bis 16, **dadurch gekennzeichnet, dass** die Aufsatzlinse (9) derart ausgebildet und auf das Transmissionselement (6) abgestimmt ist, dass die Aufsatzlinse zusätzlich die Ausbreitungsrichtung des Messsignals ändert.

18. System (1) nach einem der Ansprüche 2 bis 17, **dadurch gekennzeichnet, dass** dem Füllstandmessgerät (2) eine Mehrzahl an Aufsätzen (3) zugeordnet ist, mit denen unterschiedliche Öffnungswinkel des Messsignals und/oder unterschiedliche Richtungsänderungen in Ausbreitungsrichtung des Messsignals realisiert werden, insbesondere wobei sich die einzelnen Aufsätze (3) in der Form und/oder in der Größe und/oder in dem Material der Aufsatzlinse (9) und/oder im Abstand der Aufsatzlinse (9) zum Transmissionselement (6) im verbundenen Zustand unterscheiden.

## Claims

1. Attachment (3) for connection to a fill level measuring device (2) for measuring the fill level of a medium in a container (10), wherein the attachment (3) has an attachment lens (9) which is arranged on the medium side in the mounted state and is suitable for coupling the measuring signal into the container (10),
**characterized in**
**that** the attachment lens (9) is designed and, during operation, can be arranged behind a transmission element (6) of the fill level measuring device (2) in the direction of propagation of the measuring signal in such a way that it changes the opening angle of the measuring signal.

2. System (1) comprising a fill level measuring device (2) for measuring the fill level of a medium in a container (10) and at least one attachment (3) according to claim 1, wherein the fill level measuring device (2) has a control and evaluation unit (4) for generating a measuring signal and a process connection element (5), wherein the process connection element (5) has the transmission element (6) on the medium side, wherein the transmission element (6) is at least partially permeable for the measuring signal,
**characterized in**
**that** at least one attachment (3) is connected to the process connection element (5),
so that the attachment lens (9) is arranged behind the transmission element (6) in the direction of propagation in such a way that it changes the opening angle of the measuring signal.

3. System (1) according to claim 2, **characterized in that** the transmission element (6) is designed as a lens (7) or as a window.

4. System (1) according to one of claims 2 or 3, **characterized in that** the connection between the process connection element (5) and the attachment (3) is designed as a detachable connection, wherein the connection is designed as a non-positive and/or positive connection, wherein the connection is preferably implemented via a thread or via a latching connection or via a flange connection.

5. System (1) according to one of claims 2 or 3, **characterized in that** the connection between the process connection element (5) and the attachment (3) is designed as a non-detachable connection, wherein the non-detachable connection is preferably designed as a substance-to-substance connection.

6. System (1) according to any one of claims 2 to 5, **characterized in that** a holder is provided, wherein the attachment can be connected to the container (10) via the holder.

7. System according to any one of claims 2 to 6, **characterized in that** the attachment (3) is designed as an adapter, wherein the adapter is designed in particular in such a way that it can be connected both to the process connection element and to a container connection via a thread.

8. System (1) according to any one of claims 2 to 7, **characterized in that** the at least one attachment (3) has an interior space and that the interior space is at least partially hollow, wherein, in particular, the region between the transmission element (6) and the attachment lens (9) is designed as a hollow space.

9. System (1) according to any one of claims 2 to 8, **characterized in that** the at least one attachment (3) has an interior space and that at least one dielectric material (12) is present in the interior space of the at least one attachment (3) for guiding and/or for adjusting the measuring signal.

10. System (1) according to any one of claims 2 to 9, **characterized in that** the at least one attachment (3) has an interior space and that a horn structure for guiding the measuring signal is present in the interior space of the at least one attachment (3).

11. System (1) according to any one of claims 2 to 10, **characterized in that** the transmission element (6) is designed as a lens (7), wherein the diameter of this lens (7) is smaller than the diameter of the attachment lens (9).

12. System (1) according to any one of claims 1 to 9, **characterized in that** the transmission element (6) is designed as a lens (7), wherein the diameter of this lens (7) is larger than the diameter of the attachment lens (9).

13. System (1) according to any one of claims 2 to 10, **characterized in that** the transmission element (6) is designed as a lens (7), wherein the diameter of this lens (7) is substantially identical to the diameter of the attachment lens (9).

14. System (1) according to claim 8, **characterized in that** an overpressure protection (11) is present in the region of the hollow space for limiting the overpressure in the hollow space.

15. System (1) according to claim 14, **characterized in that** the overpressure protection (11) is designed in such a way that it is triggered when a limit value for the pressure in the attachment is exceeded, wherein the limit value is smaller than the maximum permitted process pressure, wherein, in particular, the limit value is approximately one third of the process pressure.

16. System (1) according to any one of claims 2 to 15, **characterized in that** the transmission element (6) and/or the attachment lens (9) are designed as a seal.

17. System according to any one of claims 2 to 16, **characterized in that** the attachment lens (9) is designed and adjusted to the transmission element (6) in such a way that the attachment lens additionally changes the propagation direction of the measuring signal.

18. System (1) according to any one of claims 2 to 17, **characterized in that** the fill level measuring device (2) is assigned a plurality of attachments (3) with which different opening angles of the measuring signal and/or different directional changes in the propagation direction of the measuring signal are implemented, wherein, in particular, the individual attachments (3) differ in the shape and/or in the size and/or in the material of the attachment lens (9) and/or in the distance of the attachment lens (9) from the transmission element (6) in the connected state.

## Revendications

1. Embout (3) à attacher à un transmetteur de niveau (2) pour mesurer le niveau d'un milieu dans un récipient (10), l'embout (3) présentant une lentille d'embout (9) qui est disposée côté milieu à l'état monté et qui est adaptée pour injecter le signal de mesure dans le récipient (10),
**caractérisé en ce que**
la lentille d'embout (9) est réalisée et peut être disposée en cours de fonctionnement dans la direction de propagation du signal de mesure derrière un élément de transmission (6) du transmetteur de niveau de telle sorte qu'elle modifie l'angle d'ouverture du signal de mesure.

2. Système (1) composé d'un transmetteur de niveau (2) pour mesurer le niveau d'un milieu dans un récipient (10) et d'au moins un embout (3) selon la revendication 1, dans lequel le transmetteur de niveau (2) présente une unité de commande et d'évaluation (4) pour produire un signal de mesure, et un élément de raccordement de processus (5), dans lequel l'élément de raccordement de processus (5) présente côté milieu l'élément de transmission (6), l'élément de transmission (6) laissant au moins partiellement passer le signal de mesure,
**caractérisé**
**en ce que** ledit au moins embout (3) est relié à l'élément de raccordement de processus (5) de sorte que la lentille d'embout (9) est disposée dans la direction de propagation du signal de mesure derrière l'élément de transmission (6) de telle sorte qu'elle modifie l'angle d'ouverture du signal de mesure.

3. Système (1) selon la revendication 2, **caractérisé en ce que** l'élément de transmission (6) est réalisé sous forme de lentille (7) ou de fenêtre.

4. Système (1) selon l'une quelconque des revendications 2 ou 3, **caractérisé en ce que** la liaison entre l'élément de raccordement de processus (5) et l'embout (3) est réalisée sous la forme d'une liaison amovible, dans lequel la liaison est réalisée sous la forme d'une liaison par adhérence et/ou par complémentarité de forme, la liaison étant réalisée par l'intermédiaire d'un filetage ou d'une liaison par encliquetage ou d'une liaison à bride.

5. Système (1) selon l'une quelconque des revendications 2 ou 3, **caractérisé en ce que** la liaison entre l'élément de raccordement de processus (5) et l'embout (3) est réalisée sous la forme d'une liaison inamovible, la liaison inamovible étant de préférence réalisée par liaison de matière.

6. Système (1) selon l'une quelconque des revendications 2 à 5, **caractérisé en ce qu'**un support est présent, l'embout pouvant être relié au récipient (10) par l'intermédiaire du support.

7. Système selon l'une quelconque des revendications 2 à 6, **caractérisé en ce que** l'embout (3) est réalisé sous la forme d'un adaptateur, l'adaptateur étant en particulier réalisé de telle sorte qu'il peut être relié par l'intermédiaire d'un filetage à la fois à l'élément de raccordement de processus et à un raccordement de récipient.

8. Système (1) selon l'une quelconque des revendications 2 à 7, **caractérisé en ce que** ledit au moins un embout (3) présente un espace intérieur, et **en ce que** l'espace intérieur est réalisé de manière au moins partiellement creuse, dans lequel en particulier la zone entre l'élément de transmission (6) et la lentille d'embout (9) est réalisée sous la forme d'une cavité.

9. Système (1) selon l'une quelconque des revendications 2 à 8, **caractérisé en ce que** ledit au moins un embout (3) présente un espace intérieur, et **en ce que** dans l'espace intérieur dudit au moins un embout (3), au moins un matériau diélectrique (12) est présent pour conduire et/ou adapter le signal de mesure.

10. Système (1) selon l'une quelconque des revendications 2 à 9, **caractérisé en ce que** ledit au moins un embout (3) présente un espace intérieur, et **en ce que** dans l'espace intérieur dudit au moins un embout (3), une structure en cornet est présente pour conduire le signal de mesure.

11. Système (1) selon l'une quelconque des revendications 2 à 10, **caractérisé en ce que** l'élément de transmission (6) est réalisé sous la forme d'une lentille (7), dans lequel le diamètre de cette lentille (7) est inférieur au diamètre de la lentille d'embout (9).

12. Système (1) selon l'une quelconque des revendications 2 à 10, **caractérisé en ce que** l'élément de transmission (6) est réalisé sous la forme d'une lentille (7), dans lequel le diamètre de cette lentille (7) est supérieur au diamètre de la lentille d'embout (9).

13. Système (1) selon l'une quelconque des revendications 2 à 10, **caractérisé en ce que** l'élément de transmission (6) est réalisé sous la forme d'une lentille (7), dans lequel le diamètre de cette lentille (7) est substantiellement identique au diamètre de la lentille d'embout (9).

14. Système (1) selon la revendication 8, **caractérisé en ce que** dans la zone de la cavité, un dispositif de protection contre la surpression (11) est présent pour limiter la surpression dans la cavité.

15. Système (1) selon la revendication 14, **caractérisé en ce que** le dispositif de protection contre la surpression (11) est réalisé de telle sorte qu'il se déclenche en cas de dépassement d'une valeur limite pour la pression dans l'embout, la valeur limite étant inférieure à la pression de processus maximale autorisée, en particulier dans lequel la valeur limite est environ un tiers de la pression de processus.

16. Système (1) selon l'une quelconque des revendications 2 à 15, **caractérisé en ce que** l'élément de transmission (6) et/ou la lentille d'embout (9) est réalisé(e) sous la forme d'un joint d'étanchéité.

17. Système selon l'une quelconque des revendications 2 à 16, **caractérisé en ce que** la lentille d'embout (9) est réalisée et adaptée à l'élément de transmission (6) de telle sorte que la lentille d'embout modifie de plus la direction de propagation du signal de mesure.

18. Système (1) selon l'une quelconque des revendications 2 à 17, **caractérisé en ce qu'**une pluralité d'embouts (3) est associée au transmetteur de niveau (2) et réalise différents angles d'ouverture du signal de mesure et/ou différents changements de direction dans la direction de propagation du signal de mesure, en particulier dans lequel les embouts (3) individuels se distinguent par la forme et/ou la taille et/ou le matériau de la lentille d'embout (9) et/ou la distance de la lentille d'embout (9) par rapport à l'élément de transmission (6) à l'état relié.
